# EUROPEAN PATENT APPLICATION

(11) **EP 1 239 383 A1**
(43) Date of publication of application: **11.09.2002**
(21) Application number: 02251554.8
(22) Date of filing: 06.03.2002
(51) Int. Cl.: G06F 17/30

(54) **Electronic information storage and retrieval system**

(30) Priority: 09.03.2001 GB 0105883
(71) Applicant: Zygon Systems Ltd., London SW18 4LS (GB)
(72) Inventor: Landale, Peter, Dumfries DG 2 OXY (GB); Shantaruban, Wijeyaratnam, Surrrey CR4 2DL (GB)
(74) Representative: Musker, David Charles

(57) **Abstract**

A system (1) for the storage and retrieval of electronic information, the system the characterised by: a repository (7) for unstructured storage of a plurality of electronic information items (11); a view applicator (17) for applying a view (19) to said repository (7) and for retrieving information items relating to the view applied, wherein said view (19) defines a structure for one or more of the information items stored in the repository.

## Description

### FIELD OF THE INVENTION

The present invention relates to a system for the storage and retrieval of electronic information, and to a method for storing and retrieving electronic information.

### BACKGROUND TO THE INVENTION

It has previously been proposed to store electronic information items in a so-called relational database where information items of that database are related to one another by a fixed, strictly defined hierarchical structure.

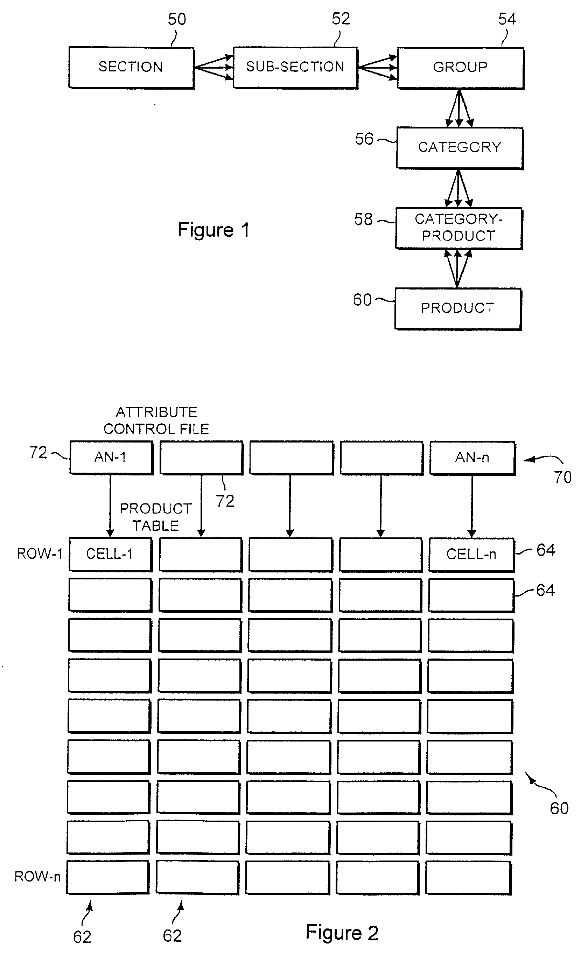

A data structure for a typical example of such a database is schematically illustrated in Figures 1 and 2 in relation to a database for storing product information. The information items of this database are classified into sections, sub-sections, groups within sub-sections and categories within groups. Any given product may fall into a plurality of categories, and each category will probably include a plurality of products.

Figure 1 shows the data storage tables used in the database to store the product data, and the interrelationships between the data storage tables. Each of a section storage table 50, a sub-section storage table 52, a group storage table 54 and a category storage table 56 store data records for each respective classification at the hierarchical level for which the storage table is responsible. The sub-section table 52 includes, in each sub-section record, a pointer to the section record pertaining to the section that each sub-section falls under. This is thus a one-to-many relationship, as indicated by the arrows fanning out from section storage table 50 to sub-section storage table 52. Similar one-to-many relationships occur between the sub-section storage table 52 and the group storage table 54, and the group storage table 54 and the category storage table 56, respectively.

A category-product storage table 58 stores relationships between the categories for which data is stored in category storage table 56 and the products for which product data is stored in product storage table 60. Each of the category storage table 56 and the product storage table 60 bear a one-to-many relationship to the category-product storage table 58.

Figure 2 illustrates the product storage table 60, and its associated attribute control file 70, in greater detail. The product storage table 60 is organised into a predetermined number of columns 62 and a row 64 for each product for which attribute data is to be stored. Each row 64 provides one product record, storing an attribute data item in each field. The attribute name for each field is stored in the corresponding field 72 of the attribute control file.

Systems such as those shown in Figures 1 and 2 have been used for many years. However, it has recently been noted that these systems can be problematic, particularly when a large amount of data needs to be stored.

For example, one problem facing such a system is concerned with the number of hierarchical classifications of the products being limited, and identical for each product. In the example shown in Figure 1, there are four such classification levels and the fixed data structures associated with each hierarchical level limit the number and structure of classification attributes which may be associated with each classification level.

In addition, where a product catalogue requires the existence of large numbers of product attributes, and where there are large numbers of products in the catalogue, the number of cells which are empty within the product table 60 becomes very large, since many attributes will not be associated with the majority of the products. For example, if a product catalogue includes one million products, one thousand different attributes are defined for those products, and the average number of attributes defined for each product individually is 20, then 98% of the cells would be empty. This leads to inefficiencies in the data storage structure.

It has also been noted that these previously proposed systems are typically hard to maintain because they rely upon a fixed data structure for their operation. As a consequence, any modifications (for example additions or deletions of product data) require extensive modifications to the data structure, and are hence time consuming and inconvenient.

Yet another disadvantage with these previously proposed systems is that they are relatively inflexible. This is because a given user's access to the data is controlled by the structure of that data. In other words, there is no way in these traditional systems for easily enabling data retrieved from the database to be tailored to meet the personal requirements of particular users or groups of users.

Another problem with these previously proposed systems is that they are typically limited in the types of information that is stored. In other words, previously proposed systems tend to store information of only one type in each database. This means that if a user wishes to obtain product information, for example, as well as management information relating for example to the companies who manufacture such products (or even different products) then that user must typically interrogate a number of different databases to obtain the information they require. This not only inconvenient for the user, but also for those persons charged with supporting the information technology infrastructure as they have to provide support for a large number of different systems.

It is an object of this invention to avoid, or at least alleviate, at least some of the problems identified above.

### SUMMARY OF THE INVENTION

In accordance with an embodiment of the present invention there is provided a system for the storage and retrieval of electronic information as defined in Claim 1.

This aspect of the invention can avoid or at least alleviate the aforementioned problems by providing a system that is structured only by the view applied. As a result, the system may easily be updated or tailored to the needs of a particular user or group of users.

Another embodiment of the invention provides a method of storing and retrieving electronic information as defined in Claim 16. A further embodiment of the invention relates to a computer program as defined in Claim 17.

Various preferred features of embodiments of the invention are set out in the attached dependent claims.

### BRIEF DESCRIPTION OF THE DRAWINGS

Embodiments of the invention will now be described, by way of example only, with reference to the accompanying drawings, in which:
Figure 1 illustrates a set of data storage tables as used in a previously proposed system;
Figure 2 illustrates a product storage table and an attributes control file, as used in a previously proposed system;
Figure 3 illustrates schematically the hardware architecture of a first embodiment of the invention;
Figure 4 illustrates schematically the software architecture of a first embodiment of the invention;
Figure 5 is a schematic illustration of the software architecture in accordance with a second embodiment of the invention; and
Figure 6 illustrates information stored in a repository and a number of views.

### DETAILED DESCRIPTION OF PREFERRED EMBODIMENTS

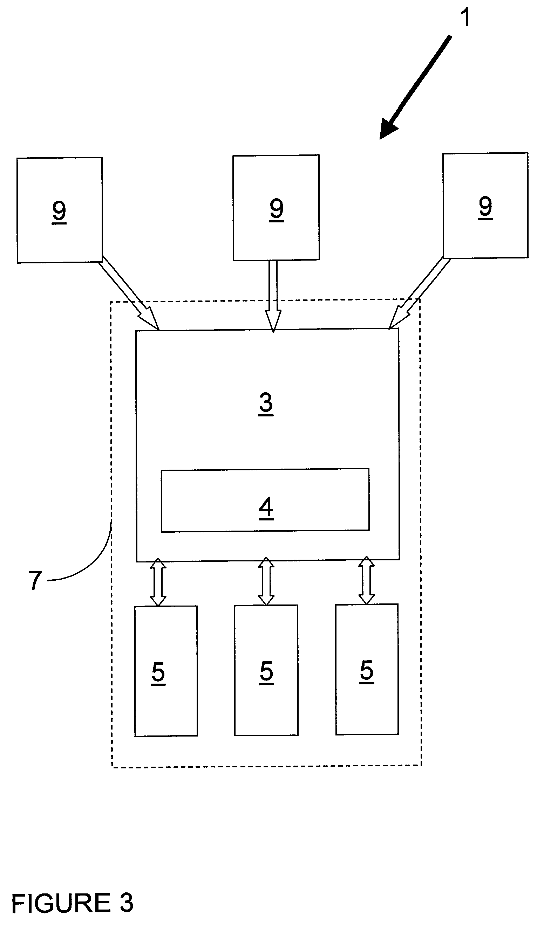

As shown in Figure 3, the system 1 comprises, at its core, an information server 3 including one or more storage devices 5 which function as a repository 7 for electronic information items. The repository is maintained by a repository management software module 4 run on the host server 3. The information server may be an SQL 92-compliant information server, such as an Oracle (TM) or Sybase (TM) information server for example. The storage devices will typically include one or more hard disks, CD or DVD-Rom drives or other suitable storage devices. Preferably the storage devices are re-writable with information.

In this preferred embodiment, the information server is connected to one or more terminals 9 (only three of which are shown) which may each comprise, for example, a Microsoft NT personal computer (PC) or server. The terminals 9, in this embodiment, permit user access to the repository 7 via the information server 3, although it will be apparent to those skilled in the art that users may instead be allowed to directly access the repository at the server 3.

It is important to note that the terminals 9 need not be user terminals (i.e. terminals operated by a user to access the repository) but could instead be computers programmed automatically to access the repository without user instruction.

The connections to the information server may be accomplished by a variety of different means. For example, they could comprise hard-wired fixed connections, telephonic connections (wired or wireless), network connections (for example a WAN (wide area network) or LAN (large area network) or any combination of these. As a further alternative, one or more of the connections could be established over an internet, such as the world wide web for example.

In another embodiment the management software module (and indeed the information server as a whole) may be maintained by a plurality of networked servers, rather than a single stand-alone server. The servers could be connected to one another by a WAN (wide area network), LAN (large area network) or by an internet (such as the world wide web) for example. Each of the servers could have a respective data storage device, for example a hard disk or a rewritable compact disk, which is accessible by itself and the other computers of the network - the networked storage devices forming the repository for information items. Alternatively, a single common storage device (or set of devices) accessible by all of the computers could instead be provided.

As a further alternative, one or more of the servers may comprise a web server to permit some or all of the information items of the repository to be maintained as web pages on the world wide web.

As will be immediately appreciated by persons skilled in the art, the means employed to create and maintain the repository is irrelevant at least in so far as this description is concerned. For the purposes of this description it is sufficient to define the repository as being a store for electronic information - the inference being that this term should not be construed as being limited to any one particular type of storage device or arrangement of storage devices, or to a particular system architecture.

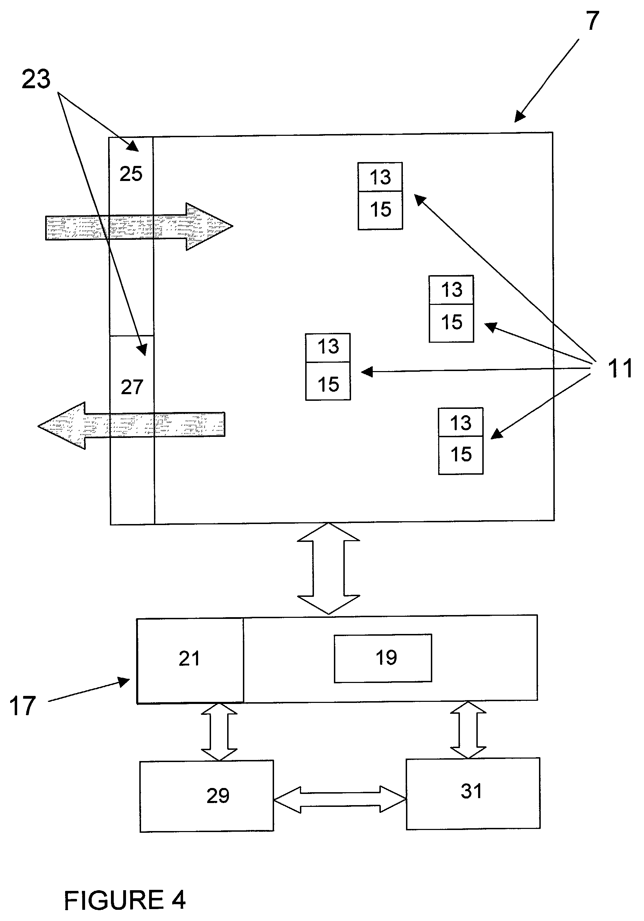

Figure 4 illustrates, schematically, a simplified embodiment of the software architecture for the data storage and retrieval system 1 shown in Figure 3.

The repository 7 is adapted to store information items 11 in an unstructured fashion. This means that the items are discretely housed within the repository without links or associations to other stored information items. This is in stark contrast to the above described previously proposed system (as shown in Figures 1 and 2) where each information item is linked to at least one other information item in a strictly defined hierarchical structure.

An advantageous consequence of this arrangement is that updating of the system can be accomplished simply by adding or deleting items to or from those already stored, without having to adapt or update an existing complex hierarchical relationship between the stored items.

Each information item 11 comprises a unique identifier 13 and may also comprise one or more associated data items 15. The information items could relate, for example, to merchandisable products, with associated data items being, for example, the price of those products or the different colour types in which the product is available. Alternatively, the information items could relate to companies, for example to manufacturers of products, and the associated data could be information related to the financial performance of those companies, contact details for those companies or to news items pertaining to those companies. The associated data may comprise textual data, multimedia data such as audio or video data or a combination of any of these.

In the preferred embodiment, some of the information items will be information items that define general information characteristics (such as the product characteristic "clothing" for example) rather than information relating to specific items (for example a specific product such as a shirt).

In general terms it is proposed that the types of information to be stored will not be limited, and that the repository will comprise a general store for all types of information items that users might need access to. In particular, it is proposed that the information storage system of the present invention will be used in place of the various discrete information storage systems that are currently employed.

As shown in Figure 4, the system includes at least one view applicator software module 17 for application of a view 19 to the information repository 7. Typically a plurality of view applicators will be provided, but for simplicity only one is shown in Figure 4.

The view applicator may be maintained in a terminal 9 connected or connectable to the repository 7, or alternatively may be maintained at the information server 3 itself.

As will later be explained, a given view defines a structure to be applied to the information items 11 of the repository 7, and the structure applied typically defines (and links) a sub-set of the items stored in the repository (although it could of course link all of the items stored in the repository). Typically, the (or each) view applicator 17 will include a plurality of stored views for selection by a user and subsequent application to the information repository. Alternatively, or additionally, the applicator 17 may include a view generator module 21 to enable a user to generate new views by defining, in a manner to be later described, a new structure for application to the repository.

Whilst it is possible that a given view will include all items in the repository it is likely that in most cases each view will provide access to a selection, in some embodiments a user-tailored selection, of the information items 11 stored in the repository 3.

Once a given view has been applied to the repository 3, at least the data 13 of some or all of those information items 11 which are encompassed by the view applied can be retrieved from the repository, for example for display to the user at one of the terminals 9.

In the preferred embodiment the system will also include one or more software translation modules 23 generally divided into inbound translation modules 25 and outbound translation modules 27. Preferably, these software modules are maintained by the information server 3, although they could instead be maintained by other computing resources connectable to the server 3.

The translation modules 23 are provided to enable new information items, which may be stored in other databases for example, to be transported into the repository; and information stored in the repository to be transported out of the repository, for example to other databases.

The translation modules may function to convert information items from the particular format of the database in which they are stored into the format of the repository of the invention, or from the format of the repository to another format, for example to a suitable format for another database.

Effectively, the translation modules exist to permit information items to be freely transferred into and out of the repository. Inbound translation modules 25, as the name suggests, permit information to be imported into the repository. Similarly, the outbound translation modules 27 enable information stored in the repository to be exported therefrom.

Transport of information into and out of the repository may occur directly between the repository and the external resource (as shown in Figure 4), or alternatively the transfer into and out of the repository may occur via one or more of the aforementioned views.

In a particularly preferred embodiment of the invention, transport out of the repository will always occur via one of the aforementioned views; whereas transport into the repository may occur directly or via one of the aforementioned views.

In the preferred embodiment the system 1 may also include one or more software modules which are operable to execute predefined processes 29, such as updating of the information stored in the repository or updating of a subset of information extracted from the repository. These processes 29 interact with the repository via one or more of the aforementioned views 19, 21, and can operate to extract information from the repository for subsequent use by one or more plug-in software applications 31. The software applications 31 can also be operated by a user to utilise information extracted via one or more of the aforementioned views.

Four illustrative plug-in software applications 31 will now be described. A first plug-in application could be an Internet catalogue-publishing module. The module takes data from the repository (via one of the aforementioned views) and formats the data as an on-line Internet catalogue held on a Web server. The Internet catalogue can then be accessed by users.

A second plug-in application could be a catalogue-publishing module which is operable to produce a master CD-ROM catalogue. This application again takes data from the repository via one of the aforementioned views and provides a catalogue in the form of a binary database which is loaded onto a master CD-ROM via a suitable CD-ROM output device (not shown). The master CD-ROM may subsequently be copied for mass-production of CD-ROM product catalogues.

A third plug-in application could be a catalogue-publishing module 22 which is operable to provide a paper catalogue. This application could interface with a proprietary desktop publishing application, such as Quark Xpress (trade mark) for example, to provide for the automatic creation of paper catalogues using information retrieved from the repository via one or more of the aforementioned views. The information retrieved by this module from the repository 7 could be used by a printing facility, for example, for the mass-production of paper product catalogues.

A fourth plug-in application could be a user-specific catalogue production module, allowing users to design suitable catalogues and output those catalogues onto any desired media, via an appropriate media output device.

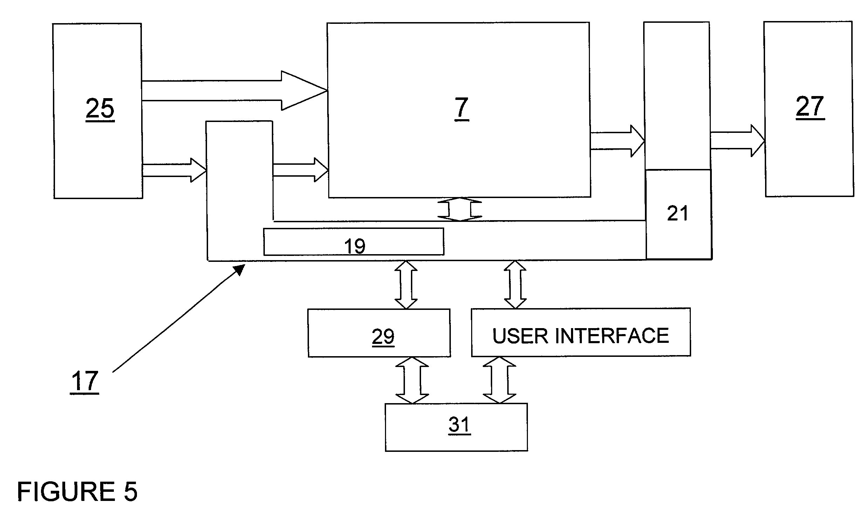

Figure 5 is a more complex view of the software architecture of the system in accordance with an embodiment of the invention.

As shown in Figure 5, user access to the repository 7 is provided by means of user interfaces which interact with the repository via one or more of the views of the view applicator 17. Information retrieved by a user can simply be displayed or otherwise utilised at the user interface, or alternatively it can be exported to one or more software applications 31 such as those described above.

Processes 29, as described above, interact with the repository 7 via one or more of the views and, in a similar fashion to the user interface, can output information for subsequent use in the applications 31.

Import of information into the repository is accomplished via the import translation module 25, and optionally also via one or more of the aforementioned views. Export of information out of the repository in this embodiment is accomplished via one or more of the aforementioned views.

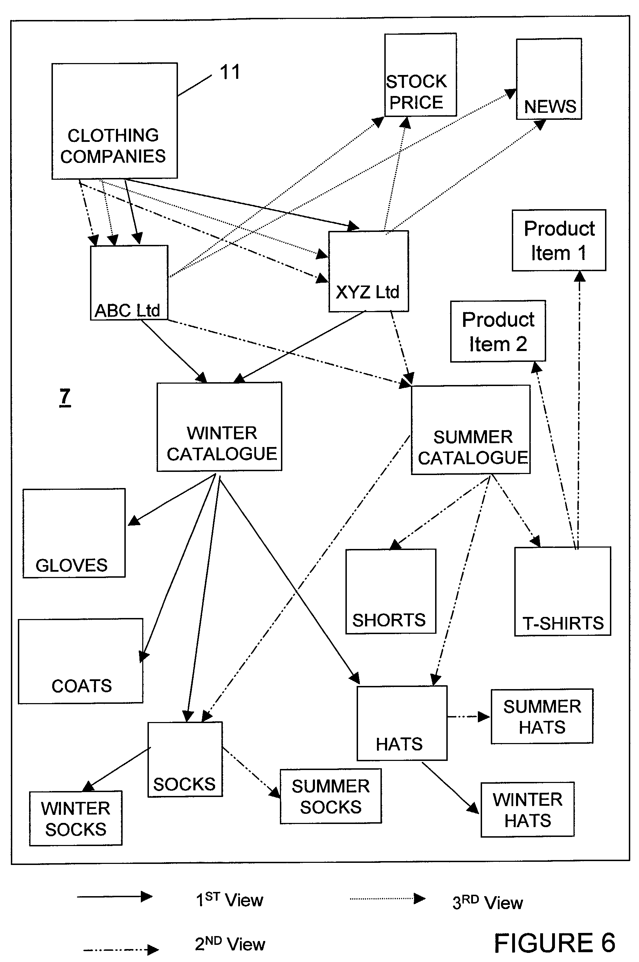

Figure 6 is a schematic representation of information items stored in a repository 7 with, in this case, three views applied thereto.

As shown, within the repository are a plurality of information items 11 which in this example refer to classes of items such as winter or summer socks or to more general characteristics such as "clothing companies", "winter catalogue" or "summer catalogue". For illustration purposes links from one of these item classes, T-Shirts, to two particular product items (Product Item 1 and Product Item 2) are shown, and it will be appreciated that the repository will typically include a large number of these product items.

As mentioned above, each information item in the repository comprises a unique identifier (not shown in Figure 6), and one or more items of data. The information items are stored in the repository without any link or other data association being applied thereto.

When a user, for example, interacts with the repository they first select a view that is of interest to them. As mentioned above, the view applicator 17 will typically include a number of different views, and three different views are shown in the example of Figure 6. After selection of a given view, the view applicator applies the selected view to the repository to enable the user, for example, to retrieve information relating to the view selected.

In the example shown, the first view (indicated by the unbroken arrows) links the winter catalogues of the clothing companies, ABC Ltd and XYZ ltd. The second view (indicated by the dashed and dotted arrows) links the summer catalogues of the aforementioned clothing companies, whereas the third view (indicated by the dotted arrows) links business or management information about the aforementioned companies.

When a user selects one of the aforementioned views they will only be provided with access to those information items encompassed by the view selected (and subsequently applied to the repository). Security mechanisms may be provided to limit a given user's access to a subset of the views available, or to discrete portions of a given view. For example, in the system of Figure 6 the first and second views could be made available to prospective customers using the system, and the business information provided by the third view could be limited only to employees or other authorised persons. The third view could be further limited so that general access to the stock price, for example, is not permitted even if a given user should be permitted to access that view. Access to the stock price information item in such an example would then be limited to a subset of the limited set of persons permitted access to the management or business information represented by the third view.

As mentioned above, the view applicator 17 of the preferred embodiment includes a view generator module 21 which permits appropriately authorised individuals to generate their own views of the information stored in the repository. For example, a given user who is only interested in T-shirts provided by the aforementioned companies could construct a fourth view comprising a link (i.e. a hierarchical structure) from the clothing companies information item to the company items (for ABC Ltd, XYZ Ltd and any other companies of interest), and from there direct to the T-shirts information item or even directly to the Product Items themselves. As an alternative to the effectively hierarchical structures described above with reference to Figure 6, a given view could simply comprise a structure that defines an association between items of the repository. For example, in the repository of Figure 6 one view could link T-shirt product items with Shorts product items (not shown) and/or Hats product items (also not shown) without the hierarchical links to information items such as "Winter Catalogue", "Summer Catalogue" or "Clothing Companies".

Views could be constructed by means of a graphical user interface (GUI), for example, from which a user selects information items and links those information items to other information items.

It will be appreciated from the above that the system of the present invention is highly configurable, and that the information presented to a given user can be tailored to their individual requirements. It will also be appreciated that many users can inspect the repository at any one time, with the potential for each of those users to be provided with a different view of the information stored.

Another advantage of the aforementioned system is that it avoids a significant disadvantage of previous systems where access to the system typically has to be disabled whilst the database of information stored is updated. In the present case, information items can be added to or deleted from the repository without any adverse effect upon, in practice, the majority of the previously defined views. Only those views which will require, or will no longer require, access to the information items added or deleted will subsequently need to be updated, and updating of those views can take place without affecting access to the repository by other views.

Preferably the system also comprises search software modules, for example as a component of the view applicator, to enable users of the system to search for data falling within the scope of their search. The search software modules could be operated using selection screens on a data input device (such as one of the aforementioned terminals for example) which generates Structured Query Language (SQL).

Whilst a particular embodiment of the invention has been described herein it is to be noted that this description is provided only by way of example. It is envisaged that persons skilled in the art will be able to employ various modifications and variations of the embodiments described without departing from the scope of the present invention as defined in the appended claims.

## Claims

1. A system (1) for the storage and retrieval of electronic information **characterised by**: a repository (7) for unstructured storage of a plurality of electronic information items (11); a view applicator (17) for applying a view (19) to said repository (7) and for retrieving information items relating to the view applied, wherein said view (19) defines a structure for one or more of the information items stored in the repository.

2. A system according to Claim 1, wherein each of said information items (11) comprises a unique identifier (13) and data (15).

3. A system according to Claim 2, wherein said data (15) comprises, for example, textual data, multimedia data such as audio or video data or a combination of any of these.

4. A system according to any preceding claim, wherein said view applicator (17) comprises a plurality of views (19) for application to said repository (7), each of said views defining a different structure for application to said repository (7).

5. A system according to Claim 4, wherein said different structures each relate to a discrete subset of the information items (11) stored in the repository.

6. A system according to Claim 4 or 5, comprising a security module operable to limit access to certain of said views (19) to authorised users.

7. A system according to Claim 6, wherein said security module is operable to limit access to particular information items (11) encompassed by a said view (19).

8. A system according to any preceding claim, comprising a view generator (21) operable to generate a view (19) for application to the repository (7).

9. A system according to Claim 8, wherein said view generator (21) is user operable to provide a view (19) tailored to the particular requirements of that user.

10. A system according to Claim 8 or 9, wherein said view generator (21) permits a user to define a view (19) by defining links or associations between information items of the repository.

11. A system according to any preceding claim, wherein said view (19) defines a structure that comprises links or associations between information items stored in said repository.

12. A system according to Claim 11, wherein said structure defines a hierarchical tree of information items (11) stored in said repository.

13. A system according to Claim 11, wherein said structure comprises a non-hierarchical association of information items (11).

14. A system according to Claim 12 and 13, wherein said structure defines a mix of non-hierarchical associations and hierarchical trees.

15. A system according to any preceding claim, comprising one or more software modules (31) which are operable to execute predefined processes (29) on information items relating to a view applied to the repository.

16. A method of storing and retrieving electronic information (11), the method comprising the steps of: establishing an unstructured repository (7) of electronic information items (11); providing a view (19) for application to said repository (7), said view (19) defining a structure for one or more of the information items (11) stored in the repository; applying the view (19) to the repository (7); and retrieving one or more of the information items (11) relating to the view (19) applied.

17. A computer program comprising one or more computer program portions that, when executed in an execution environment, are operable to implement one or more of the steps of Claim 16.
